Europäisches Patentamt

(19) European Patent Office

Office européen des brevets

(11) Numéro de publication: **0 337 824**

**A2**

## (12) DEMANDE DE BREVET EUROPEEN

(21) Numéro de dépôt: **89400340.9**

(51) Int. Cl.⁴: **G 01 P 3/487**

(22) Date de dépôt: **07.02.89**

(30) Priorité: **04.04.88 US 177290**

(43) Date de publication de la demande:
**18.10.89 Bulletin 89/42**

(84) Etats contractants désignés: **DE ES GB IT SE**

(71) Demandeur: **S.N.R. ROULEMENTS**
**Boîte Postale 17 1, rue des Usines**
**F-74010 Annecy Cédex (FR)**

(72) Inventeur: **Santos, Alfred John**
**43 Cherry Brook Road**
**Canton Center, CT 06020 (US)**

(74) Mandataire: **Ernst-Schonberg, Michel et al**
**R.N.U.R. S. 0804 B.P. 103 8 & 10, avenue Emile-Zola**
**F-92109 Boulogne Billancourt (FR)**

(54) **Roulement à capteur magnétique avec un circuit de détection autocompensé.**

㊸ Roulement à capteur magnétique avec un circuit de détection autocompensé tel qu'un capteur de vitesse appliqué à un roulement et à un arbre rotatif constitué par la combinaison des éléments suivants : un capteur magnétique à semiconducteurs, délivrant un signal de sortie analogique proportionnel à la vitesse de rotation de l'arbre, un roulement, monté sur ledit arbre, un dispositif de fixation de capteur sur le roulement, un codeur à pôles magnétiques dont les pôles sont disposés selon une configuration alternée, de manière que chaque pôle Nord soit entre deux pôles Sud et chaque pôle Sud entre deux pôles Nord, et un circuit de détection autocompensé de traitement du signal de sortie du capteur de vitesse de manière à obtenir un signal numérique proportionnel à la vitesse de rotation de l'arbre; ce circuit de détection comportant d'une part un dispositif de compensation des facteurs extérieurs qui engendrent une dérive du signal de sortie du capteur, possédant d'autre part des moyens de traitement des signaux relativement faibles de sortie du capteur.

FIG.7

EP 0 337 824 A2

Description

# ROULEMENT A CAPTEUR MAGNETIQUE AVEC UN CIRCUIT DE DETECTION AUTOCOMPENSE

La présente invention concerne un roulement à capteur magnétique avec un circuit de détection autocompensé qui permet de compenser les effets de facteurs extérieurs sur le signal de sortie d'un capteur magnétique à semiconducteurs. Plus précisément, la présente invention est constituée par un roulement à capteur avec un circuit de compensation notamment de la température, de contraintes mécaniques extérieures, des champs magnétiques extérieurs et d'autres facteurs externes. Cette compensation permet de détecter de façon satisfaisante et avec une meilleure fiabilité malgré des champs magnétiques faibles, le signal de sortie d'un capteur magnétique à semiconducteurs. Différents facteurs peuvent modifier l'intensité du champ magnétique. La proximité physique du capteur par rapport au codeur magnétique et la densité du flux magnétique engendré par ledit codeur constituent deux facteurs particulièrement importants dans la présente invention.

La présente invention s'applique par exemple aux roulements à capteur de vitesse magnétique, faisant appel à un capteur à effet Hall, à un capteur, à magnétorésistance ou à un capteur à magnétotransistor, et s'applique notamment aux butées axiales et aux roulements. Elle convient tout particulièrement à une utilisation dans les transmissions et dans les systèmes de freinage avec dispositif antiblocage.

Certains capteurs magnétiques de roulement traditionnels délivrent un signal de sortie linéaire, habituellement amplifié avant traitement. Ce signal amplifié est alors comparé à un signal de référence fixe, par exemple un seuil de tension, pour obtenir l'information désirée du capteur. Ce type de traitement conventionnel des signaux du capteur a pour principal inconvénient, de délivrer un signal de sortie du capteur magnétique qui varie fortement dans le temps, uniquement en raison des effets de facteurs extérieurs comme la température, les contraintes mécaniques et les champs magnétiques extérieurs. Cette variation est due, dans une large mesure, à l'action de ces facteurs extérieurs sur les caractéristiques physiques du codeur magnétique détectées par le capteur magnétique. On utilise différentes techniques pour compenser ces effets extérieurs. Deux bobinages de détection à effet Hall à branchement différentiel suppriment par exemple le bruit aléatoire et autres tensions "parasites" de sortie. Un exemple de ce type de roulement est décrit dans le Brevet U.S. n° 3 932 813.

Le roulement à capteur magnétique avec un circuit de détection autocompensé conforme à la présente invention soustrait le roulement à l'influence de ces facteurs extérieurs et de leurs effets. Ce roulement permet ainsi de détecter de manière appropriée un signal magnétique relativement plus faible, issu du codeur magnétique.

Au fur et à mesure du vieillissement du codeur magnétique la sensibilité du capteur magnétique à semiconducteur et son circuit associé reste relativement constante. On peut, en fait, augmenter cette sensibilité en montant un comparateur plus sensible dans le circuit de détection autocompensé décrit ci-après. Par rapport aux circuits de traitement analogiques traditionellement utilisés, le circuit de détection selon la présente invention traite de façon appropriée des signaux de sortie du capteur dont l'amplitude est inférieure aux amplitudes minima généralement admissibles.

Brièvement décrit, le roulement à capteur magnétique à circuit de détection autocompensé est constitué par un roulement comportant un capteur magnétique à semiconducteurs dans lequel ledit capteur délivre un signal de sortie qui est traité par un comparateur de sensibilité prédéterminée, auquel sont amenés deux signaux d'entrée. Un des signaux d'entrée est constitué par le signal de sortie brut du capteur magnétique à semiconducteurs. Le second signal d'entrée est engendré par un circuit parallèle au circuit du premier signal d'entrée. Le circuit du second signal est un circuit à filtre passe-bas (RC), qui reçoit le signal de sortie brut du capteur magnétique à semiconducteurs et en filtre toutes les composantes au-dessus d'une fréquence prédéterminée. Ce second signal d'entrée est alors comparé au premier signal d'entrée dans le comparateur, pour déterminer l'amplitude de leurs tensions respectives.

Si l'amplitude du premier signal d'entrée est supérieure à celle du second, le signal de sortie du comparateur sera positif. Si l'amplitude du premier signal d'entrée est inférieure à celle du second, le signal de sortie du comparateur sera, au contraire, négatif. On utilise alors le signal de sortie carré ("tout ou rien") du comparateur pour les applications numériques désirées.

On comprendra mieux la présente invention en se reportant à la description et aux dessins détaillés ci-après, dans lesquels :

la figure 1 est une vue latérale en coupe verticale d'une forme de réalisation de la présente invention incorporée à un roulement du type butée axiale;

la figure 2 est une vue de face de la plaque de butée de la figure 1, sur laquelle est monté le capteur magnétique,

la figure 3 est une vue de face de la plaque de butée à magnétisation permanente du roulement de butée de la figure 1;

La figure 4 est une vue latérale partielle en coupe verticale d'une seconde forme de réalisation de la présente invention, montée sur un arbre rotatif et incorporée à un roulement radial,

la figure 5 est une vue en perspective de la bague magnétisée du roulement radial illustré sur la figure 4;

la figure 6 est une vue en perspective de la bague extérieure du roulement radial illustré sur la figure 4;

la figure 7 est un schéma de principe du circuit de détection autocompensé selon la présente invention,

la figure 8 est un schéma de principe d'un circuit traditionnel caractéristique servant à traiter le signal de sortie électrique d'un capteur, et

les figures 9a, 9b et 9c sont les diagrammes des signaux de sortie des circuits illustrés sur les figures 7 et 8, permettant de comparer les durées de deux signaux de sortie différents.

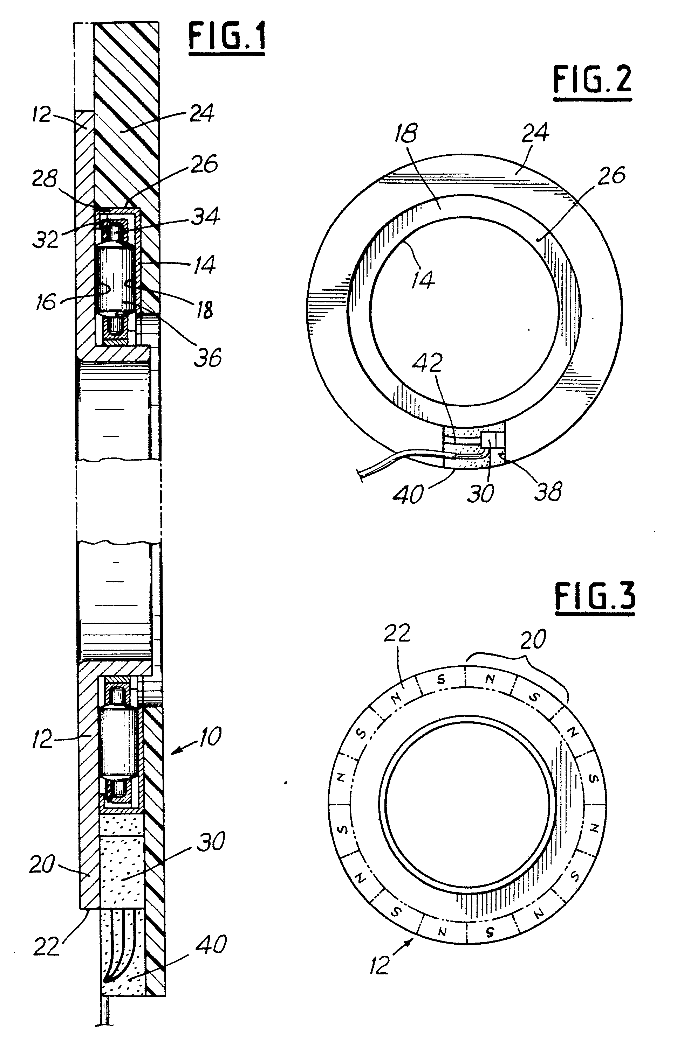

Si l'on se reporte aux dessins et en particulier aux figures 1 à 3, dans la forme de réalisation préférentielle de la présente invention, le roulement 10 illustré comporte un capteur magnétique à semiconducteurs 30 qui en fait partie intégrante. Le capteur 30 est constitué par un capteur magnétique à effet HALL ou similaire qui comporte un circuit intégré (IC) avec circuit de traitement du signal de sortie. Ce roulement 10 est une butée axiale comportant deux plaques de butée axialement espacées; une première plaque de butée annulaire 12 et une seconde plaque de butée annulaire 14. La plaque 12 comporte un chemin de roulement à extension radiale 16 sur une de ses surfaces latérales, et la plaque 14 un chemin de roulement 18 à extension radiale sur l'une de ses faces. La plaque 12 comporte également des segments aimantés, magnétisés en permanence 20, situés sur sa partie radiale extérieure 22. Les segments aimantés 20 sont disposés selon une configuration alternée, illustrée sur la figure 3, de manière à ce que chaque pôle Nord soit situé entre deux pôles Sud et chaque pôle Sud entre deux pôles Nord. Plus il y aura de segments aimantés 20 magnétisés sur la plaque 12, et plus la résolution du signal de sortie du capteur 30 sera élevée. Le capteur magnétique à semiconducteurs 30 est incorporé à un support de capteur annulaire en plastique 24, qui comporte un lamage 26 logeant la seconde plaque de butée annulaire 14.

Un flanc périphérique extérieur 28, incorporé à la plaque 14, est ajusté serré dans le lamage 26. Un bord axial du flanc 28 est recourbé sensiblement à angle droit formant de la sorte une lèvre 32 dont l'extension radiale vers l'intérieur permet de retenir dans le sens axial une cage à rouleaux 34 contenant une pluralité de rouleaux 36. La cage à rouleaux 34 et les rouleaux 36 sont montés dans le sens axial entre les chemins de roulement 16 et 18 qui se font face.

Une rainure 38 s'étend radialement dans le support du capteur 24, du lamage 26 au bord radial extérieur du support 24. Le capteur magnétique à semiconducteurs 30 est monté dans la rainure 38 et immobilisé par une résine 40 ou un matériau analogue, comme illutré sur la figure 2. Ce montage positionne le capteur 30 dans l'alignement radial des segments magnétiques 20 et à proximité de ceux-ci.

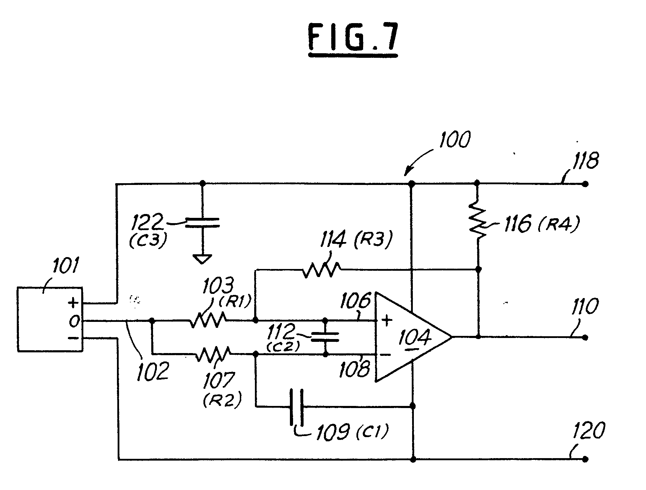

Un circuit de traitement du signal 100, décrit plus en détail ci-après est incorporé dans un circuit intégré (IC) incorporé au capteur 30. D'une manière préférentielle les composants principaux du circuit 100 sont inclus dans le circuit intégré à l'exception du condensateur 109 (figure 7) et du condensateur 122, lorsqu'il est utilisé.

Un concentrateur de flux magnétique 42 représenté à la figure 2, est disposé de façon juxtaposée circonférenciellement au capteur 30. Ce concentrateur de flux magnétique 42 a pour fonction de constituer un circuit de flux magnétique de résistance moindre à proximité immédiate du capteur 30. Le flux magnétique ayant tendance à se concentrer dans les zones de moindre résistance, le concentrateur 42 augmente la valeur du flux magnétique détecté par le capteur magnétique 30.

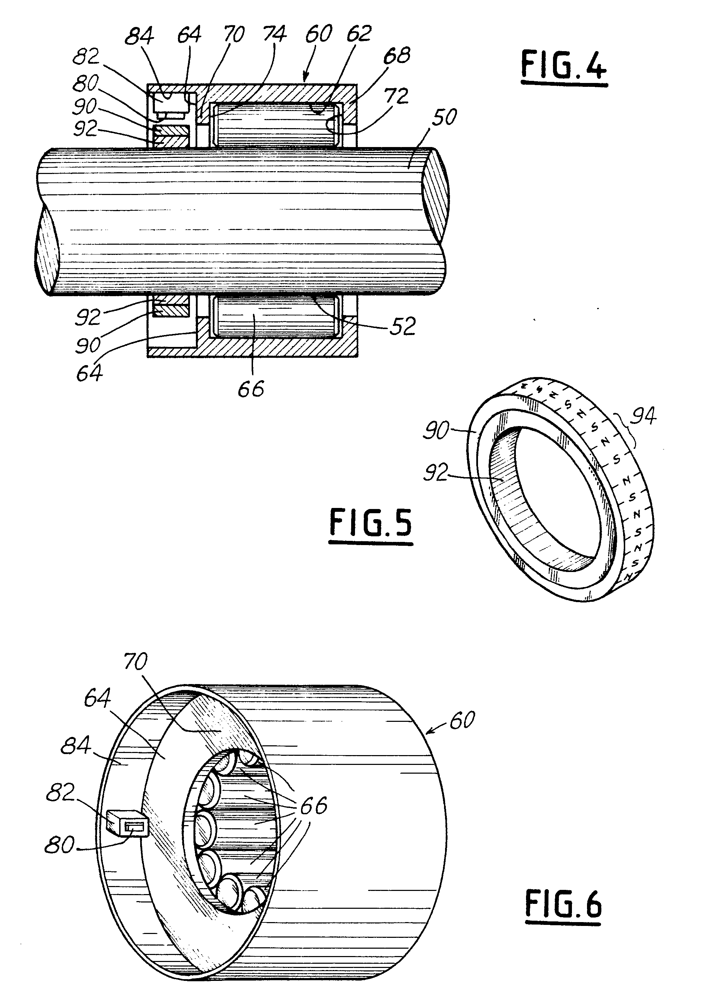

En référence aux figures 4 et 6, un arbre rotatif 50 est monté à l'intérieur d'une bague annulaire 60. L'arbre 50 porte un chemin de roulement 52 sur une partie de sa surface extérieure. La bague 60 comporte également un chemin de roulement 62, disposé sur une partie de sa surface intérieure (cf. figure 4), de manière à être dans l'alignement axial du chemin de roulement 52. La bague 60 comporte également un lamage 64 sur l'une de ses extrémités axiales, opposé au chemin de roulement 62. Une pluralité de rouleaux 66 est montée entre les chemins de roulement 52 et 62 et maintenus dans le sens axial par les parois annulaires 68 et 70 formées dans le sens radial à l'intérieur de la bague 60. L'épaulement 72 du côté intérieur de la paroi 68 et l'épaulement 74 du côté opposé sur la paroi 70 empêchent les rouleaux 66 de sortir axialement des chemins de roulement 52 et 62.

Un capteur magnétique à semiconducteurs 80, analogue au capteur 30 des figure 1 à 3, est fixé à un support de capteur 82, lui-même fixé à la surface intérieure 84 du lamage 64.

Une bague ferro-magnétique 90, illustrée sur la figure 5, produit des champs magnétiques permanents. Cette bague annulaire 90 est fixée à l'arbre 50 par une bague de support annulaire concentrique 92. La bague 90 est magnétisée en permanence, comportant ainsi une pluralité de segments magnétiques 94 sur toute sa circonférence.

Les segments magnétiques 94 sont disposés selon une configuration alternée, comme les segments 20 de la figure 3, de manière à ce que chaque pôle Sud soit entre deux pôles Nord et, de même, chaque pôle Nord entre deux pôles Sud.

Si l'on se reporte à présent à la figure 7, le capteur 30 est constitué par un capteur magnétique 101, à semiconducteurs (par exemple, un capteur analogique à effet Hall, un capteur à magnétorésistance, un capteur à magnétotransistor ou capteur magnétique du même genre), qui délivre un signal de sortie brut analogique 102. Le signal 102 est traité par le circuit de détection 100, dont l'essentiel est incorporé dans le circuit intégré au capteur 30 ou 80. Le signal 102 est amené au circuit de détection 100 de la présente invention où il passe par la résistance 103 (de résistance R1), avant d'être amené directement à un comparateur 104, en tant que premier signal d'entrée 106. Comme le montre également la figure 7, le signal 102 est divisé juste avant la résistance R1 et passe par un circuit de dérivation parallèle, faisant fonction de filtre passe-bas. Le signal 102 est diminué par une résistance 107 (de résistance R2) et alimente le comparateur 104, en tant que second signal d'entrée 108, en passant par le condensateur 109 de filtrage (de capacité C1). Ce filtre passe-bas atténue fortement toutes les composantes de fréquence du signal 102 supérieures à une valeur de seuil prédéterminée. Le signal d'entrée 108 est une version "lissée" du signal 106. Le signal 108 est réduit à une valeur moyenne, pour amortir les variations instantanées et importantes d'amplitude du signal 102, et donc supprimer les distorsions d'amplitude de ce signal dans le temps.

Le comparateur 104 reçoit les signaux d'entrée 106 et 108 et détermine leurs valeurs respectives, pour délivrer un signal de sortie carré 110 qui change de polarité lorsque les amplitudes respectives des tensions des signaux 106 et 108 sont inversées. Plus précisément, lorsque l'amplitude du signal d'entrée 106 est supérieure à celle du signal d'entrée 108, le signal de sortie 110 qui en résulte est positif. Par contre, si l'amplitude du signal d'entrée 108 est supérieure à celle du signal 106, le signal de sortie 110 du comparateur inverse sa polarité et devient négatif. Un condensateur optionnel 112 (de capacité C2) réduit les signaux parasites du comparateur 104 provoqué par le bruit haute fréquence sur les signaux d'entrée 106 et 108. La résistance 114 (R3), en combinaison avec la résistance 103 établit la largeur de bande hystérésis du comparateur 104. La résistance 116 (R4) constitue une résistance de charge du signal de sortie 110. Le conducteur 118 alimente le circuit 100 en puissance et le condensateur optionnel 122 (C3) fournit une puissance corrigée. Le conducteur 120 est un conducteur commun ou de terre. Le condensateur 109 et le condensateur optionnel 122 sont les seuls composants électriques de la figure 7 non incorporés dans le circuit intégré (IC) du capteur 30 ou 80. La limitation concernant la valeur minimale d'amplitude pic à pic du signal 102 qui peut être mesurée avec précision par le comparateur 104 avec le circuit 100 est approximativement d'un ordre de grandeur plus faible que la valeur minimale requise dans les circuits de détection de l'art antérieur.

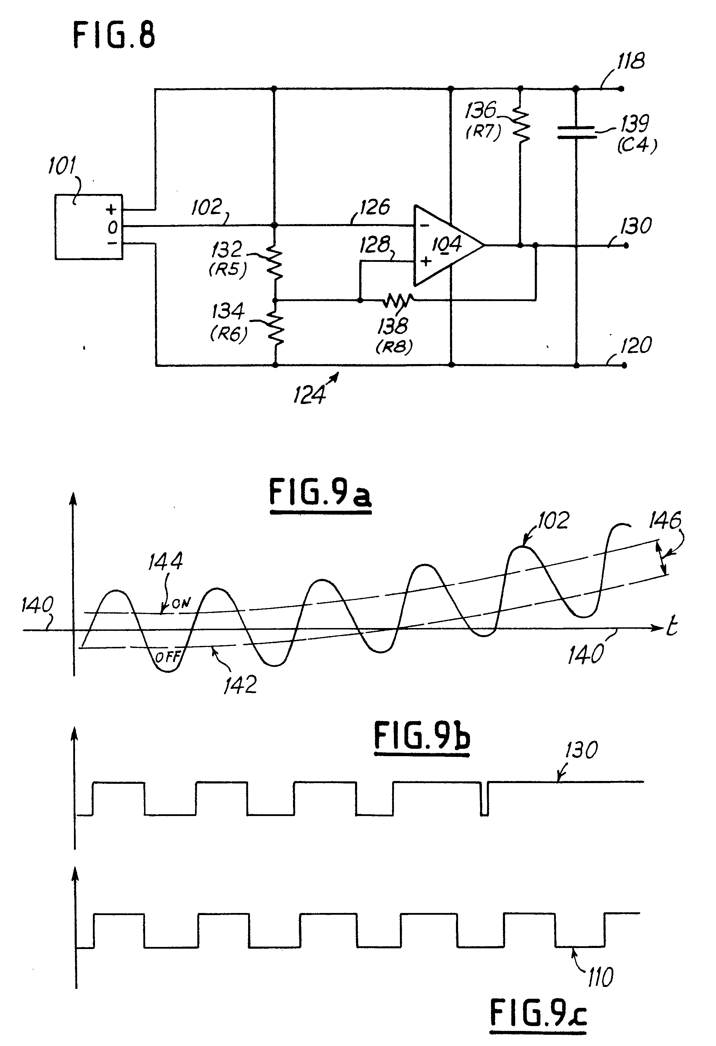

La figure 8 illustre un circuit de traitement de signaux traditionnel, ne compensant pas les facteurs extérieurs étudiés plus haut.

Le signal brut de sortie 102 du capteur magnétique 101 alimente directement le comparateur 104 en tant qu'un des deux signaux d'entrée du comparateur. Ce premier signal d'entrée 126 est comparé à un autre signal d'entrée 128 qui traverse une résistance 132 (de résistance R5). La résistance 132 est l'une des deux résistances d'un diviseur de tension, l'autre étant constituée par le résistance 134 ( de résistance R6). Le signal 128 passe aussi par une résistance 138 (de résistance R8), qui contrôle la largeur de bande hystérésis. La résistance 136 (de résistance R7) fonctionne comme une résistance de charge pour le signal de sortie 130 du comparateur. Le condensateur 139 (de capacité C4) est connecté entre le conducteur de puissance 118 et le conducteur de terre 120 dans le but de réduire les tensions parasites sur le signal de puissance. La fonction du condensateur 139 est semblable à ceux des circuits conventionnels de régulation de l'alimentation de puissance.

Les figures 9a à 9c illustrent mieux encore les avantages de la présente invention. La courbe de la figure 9a montre la dérive caractéristique du signal de sortie brut 102 en fonction du temps, par rapport à un signal de référence fixe 140 (une tension de référence fixe, par exemple) et deux signaux de référence dérivés 142 et 144.

Les figures 9b et 9c représentent les signaux de sortie 130 et 110 traités par un circuit conventionnel tel que figure 8 et par un circuit conforme à la présente invention tel que figure 7 respectivement en fonction du temps et pour le signal brut de sortie tracé en figure 9a. La figure 9b montre la dérive du signal de sortie 130 du comparateur (figure 8) par rapport au signal de sortie 102 du capteur (figure 9a) et par rapport à un signal de référence fixe 140. Lorsque le capteur magnétique est influencé par des facteurs extérieures qui provoquent la dérive vers le haut du signal 102, l'ondulation alternée du signal de sortie du capteur n'est plus symétrique de part et d'autre du signal de référence 140.

Le signal 102 est plus grand que le signal de référence pendant une fraction importante de la période, supérieure à 50% de sa durée. Ceci résulte du fait que le signal de sortie carré 130 est ON durant plus de 50% du temps et que la portion OFF du signal décroît de manière correspondante comme montré à la figure 9b. Comme le signal 102 dérive pendant un certain temps, le signal de sortie 130 du comparateur n'est plus un signal carré et se transforme de plus en plus en signal ON bien que le capteur magnétique génère un signal de sortie ON de durée limitée à 50%. Contrairement, le signal de sortie 110 du comparateur du roulement à capteur magnétique conforme à l'invention conserve sa forme d'onde carrée lorsque le signal 102 dérive vers le haut. Ceci résulte de la dérive simultanée du niveau de seuil du signal OFF 142 et du niveau de seuil du signal 144 qui résulte du circuit de la figure 7. La largeur de bande 146 de l'hystérésis est maintenue à une valeur constante qui est contrôlée par les valeurs R3 et R1 des résistances 114 et 103 respectivement.

Ce traitement de signal par le circuit 100, fournit une relation précise entre le phénomène détecté par le capteur magnétique et le signal de sortie final 110 traité venant du comparateur.

**Revendications**

1. Roulement à capteur magnétique avec un circuit de détection autocompensé tel qu'un capteur de vitesse appliqué à un roulement (10 - 52, 62, 66) et à un arbre rotatif (50), caractérisé par la combinaison des éléments suivants :

- un capteur (30, 80) magnétique à semiconducteurs, délivrant un signal de sortie analogique proportionnel à la vitesse de rotation de l'arbre,

- un roulement (10-52, 62, 66) monté sur ledit arbre (50),

- un dispositif (40, 82) de fixation du capteur (30, 80) sur le roulement,

- un codeur (12, 90) à pôles magnétiques dont les pôles sont disposés selon une configuration alternée, de manière à ce que chaque pôle Nord soit entre deux pôles Sud et chaque pôle Sud entre deux pôles Nord, et

- un circuit de détection (100) autocompensé de traitement du signal de sortie du capteur de vitesse de manière à obtenir un signal numérique proportionnel à la vitesse de rotation de l'arbre ; ce circuit de détection comportant, d'une part, un dispositif de compensation des facteurs extérieurs qui engendrent une dérive du signal de sortie du capteur et possèdant d'autre part, des moyens de traitement des signaux relativement faibles de sortie du capteur.

FIG.1

FIG.2

FIG.3

FIG.4

FIG.5

FIG.6

# FIG.7

# FIG.8

# FIG.9a

# FIG.9b

# FIG.9c